# EUROPEAN PATENT APPLICATION

(11) **EP 2 088 179 A1**
(43) Date of publication of application: **12.08.2009**
(21) Application number: 07832781.4
(22) Date of filing: 29.11.2007
(51) Int. Cl.: C09J 7/02, C09J 123/22, C09J 133/06, C09J 183/07

(54) **RELEASABLE ADHESIVE SHEET**

(30) Priority: 01.12.2006 JP 2006325348
(71) Applicant: Lintec Corporation, Itabashi-ku Tokyo 173-0001 (JP)
(72) Inventor: TANAKA, Atsuhiro, Tokyo 173-0001 (JP); SUZUKI, Tomomi, Tokyo 173-0001 (JP); HAYAKAWA, Fumio, Tokyo (JP); KUBOTA, Naoki, Tokyo (JP)
(74) Representative: Gille Hrabal Struck Neidlein Prop Roos
(86) International application number: PCT/JP2007/073066
(87) International publication number: WO 2008/069095

(57) **Abstract**

Provided is a releasable pressure sensitive adhesive sheet, which is mainly used for a coating film for an automobile, and which is applicable to a coating film with insufficient curing immediately after drying. Specifically provided is a releasable pressure sensitive adhesive sheet for a curable coating film, which has a pressure sensitive adhesive layer on one face of a front substrate, in which a face of the pressure sensitive adhesive layer out of contact with the front substrate has a rolling circle arithmetic mean waviness (Wea) specified in JIS B0610 of 0.30 µm or less.

## Description

### Technical Field

The present invention relates to a releasable pressure sensitive adhesive sheet mainly used as a protective sheet or tape for a curable coating film for an automobile, and more specifically, to a releasable pressure sensitive adhesive sheet mainly used as a protective sheet or tape for a urethane-based curable coating film for an automobile, the releasable pressure sensitive adhesive sheet having the following characteristics: the releasable pressure sensitive adhesive sheet neither deteriorates nor discolors a coating film applied to the body or parts of an automobile, and is excellent in releasability after having been stuck for a long time period.
The releasable pressure sensitive adhesive sheet of the present invention is a releasable pressure sensitive adhesive sheet applicable to an incompletely cured curable coating film which is apt to deform and which has the following drawback: the coating film is dried to such an insufficient extent that a trace amount of a solvent remains in the coating film, or the coating film is formed of a paint which cures insufficiently after having been dried. The releasable pressure sensitive adhesive sheet is particularly usable as a releasable pressure sensitive adhesive sheet for a protective sheet or tape for a plastic part for an automobile coated with a urethane-based paint, such as a bumper.

### Background Art

The following inconvenience occurs in the transport of an automobile: a coating film for the body or parts of the automobile becomes lackluster, discolors, or is damaged owing to contact with a suspended solid such as dust, dirt, rain, or pollen, a colliding substance such as sand, and a worker. Attempts have been made to apply a wax-based material, or to stick a protective sheet or tape, to the coating film for the body or parts of the automobile for preventing such inconvenience.
However, in curing of the coating film applied to the body or parts by heating, the curing reaction of the coating film may not proceed sufficiently even after the coating film has been passed through a drying furnace.
In particular, a bumper as one of the parts of the automobile has been recently made of a synthetic resin instead of a metal that has been conventionally used in order that the weight of the bumper may be reduced, and the surface of the bumper made of a synthetic resin is typically coated in order that the external appearance of the bumper may be made beautiful. Attempts have been made to stick a protective sheet or tape to the bumper made of a synthetic resin as well for preventing such inconvenience as described above.
However, in curing of the coating film applied to the bumper made of a synthetic resin by heating, the curing temperature cannot be increased so that the resin used in the bumper may not be adversely affected, for example, may not be deteriorated or deformed (In ordinary cases, the coating film is dried at a temperature as low as approximately 50 to 100°C for approximately 10 to 40 minutes. A temperature higher than the foregoing results in the occurrence of the deformation of the bumper, and the drying time cannot be lengthened so that an energy consumption and a process time may be reduced). Accordingly, even after the bumper made of a resin coated with the coating film has been passed through a drying furnace, a trace amount of a solvent occasionally remains in the coating film owing to insufficient drying of the coating film, or a curing reaction does not occasionally proceed sufficiently in the coating film. When creases or air bubbles are incorporated in sticking of a protective sheet or tape to such a coating film which is apt to deform, the curing reaction of the coating film to which the protective sheet or tape has been stuck proceeds over time, and the curing proceeds completely while the irregularities of the protective sheet or tape are transferred onto the coating film. Accordingly, after the protective sheet or tape has been released from the coating film, the coating film involves the emergence of a serious problem in terms of an external appearance thereof.
The following products have been proposed as examples of the protective sheet or tape for the coating film: a product obtained by providing a polyisobutylene-based pressure sensitive adhesive layer on a supporting substrate (for example, Patent Document 1), a product obtained by providing, on a supporting substrate, a pressure sensitive adhesive layer composed of a butyl rubber or styrene-ethylene/butylene copolymer-styrene (for example, Patent Document 2), a product obtained by providing, on a supporting substrate, a layer composed of a composition prepared by mixing a polyisobutylene-based pressure sensitive adhesive with a small amount of an acryl-based pressure sensitive adhesive (for example, Patent Document 3), a product obtained by providing, on a supporting substrate, a layer composed of a composition prepared by blending an acryl-based pressure sensitive adhesive with a polyfunctional isocyanate compound (for example, Patent Document 4), a product obtained by providing an ethylene-vinyl acetate-glycidyl methacrylate copolymer on a supporting substrate (for example, Patent Document 5), and a product obtained by providing, on a supporting substrate, a pressure sensitive adhesive layer obtained by the photo-curing of a resin mainly composed of an ionomer obtained by bonding molecules of an ethylene-methacrylic acid copolymer with a metal ion (for example, Patent Document 6).
The following product has also been proposed (for example, Patent Document 7) : a product obtained by providing, on a supporting substrate, a pressure sensitive adhesive layer obtained by cross-linking a resin composition, which contains a urethane (meth)acrylate having a hydrogenated polybutadiene skeleton and an alkyl (meth) acrylate having 6 or more carbon atoms, with an active energy beam.
However, the performance of a protective sheet or tape for a urethane-based coating film for an automobile having such a pressure sensitive adhesive layer as described above is still insufficient. The insufficiency may result from the surface appearance of the pressure sensitive adhesive layer of the protective sheet or tape.

Patent Document 1: JP 9-104850 A
Patent Document 2: JP 9-291262 A
Patent Document 3: JP 6-73352 A
Patent Document 4: JP 8-143830 A
Patent Document 5: JP 10-121002 A
Patent Document 6: JP 10-121010 A
Patent Document 7: JP 2002-309185 A

### Disclosure of the Invention

### Problems to be solved by the Invention

In view of such circumstances, an object of the present invention is to solve the above problem called "irregularities" in a releasable pressure sensitive adhesive sheet to be mainly used as a protective sheet or tape for a curable coating film for an automobile.

### Means for solving the Problems

The inventors of the present invention have made extensive studies. As a result, the inventors have found that the above problem can be solved by using a releasable pressure sensitive adhesive sheet the pressure sensitive adhesive layer of which has an arithmetic mean waviness equal to or lower than a certain value. Thus, the inventors have completed the present invention.

That is, the present invention provides the following:
(1) A releasable pressure sensitive adhesive sheet for a curable coating film having a pressure sensitive adhesive layer on one face of a front substrate, in which a face of the pressure sensitive adhesive layer out of contact with the front substrate has a rolling circle arithmetic mean waviness (Wea) specified in JIS B0610 of 0.30 µm or less;
(2) A releasable pressure sensitive adhesive sheet according to the item (1), in which a release agent layer face of a release material having a release agent layer is stuck to the face of the pressure sensitive adhesive layer out of contact with the front substrate, and the release agent layer has an arithmeticmeanwaviness (Wa) specified in JIS B0601 of 0.20 µm or less;
(3) A releasable pressure sensitive adhesive sheet according to the item (2), in which a face of a substrate of which the release material is constituted to be treated with a release agent has an arithmetic mean waviness (Wa) specified in JIS B0601 of 0.20 µm or less;
(4) A releasable pressure sensitive adhesive sheet according to the item (1), in which a release agent layer is present on a face of the front substrate out of contact with the pressure sensitive adhesive layer, and the release agent layer has an arithmetic mean waviness (Wa) specified in JIS B0601 of 0.20 µm or less;
(5) A releasable pressure sensitive adhesive sheet according to the item (4), in which a face of the front substrate to be treated with a release agent has an arithmetic mean waviness (Wa) specified in JIS B0601 of 0.20 µm or less;
(6) A releasable pressure sensitive adhesive sheet according to any one of the items (1) to (5), in which the curable coating film has an elastic modulus at 23°C measured by a nano-indentation method of 0.5 GPa to 3.5 GPa;
(7) A releasable pressure sensitive adhesive sheet according to any one of the items (1) to (5), in which the pressure sensitive adhesive layer includes a layer composed of an addition reaction type silicone-based pressure sensitive adhesive;
(8) A releasable pressure sensitive adhesive sheet according to any one of the items (1) to (5), in which the pressure sensitive adhesive layer includes a layer obtained by cross-linking a layer composed of a composition containing an acryl-based homopolymer or copolymer which contains at least one kind selected from butyl (meth) acrylate, 2-ethylhexyl (meth)acrylate, and isooctyl (meth) acrylate as a monomer component and which is free of active hydrogen, and urethane (meth) acrylate through irradiation with an active energy beam;
(9) A releasable pressure sensitive adhesive sheet according to any one of the items (1) to (5), in which the pressure sensitive adhesive layer includes a layer obtained by cross-linking molecules of a copolymer having an unsaturated group at any one of side chains thereof and containing at least one kind selected from butyl (meth)acrylate, 2-ethylhexyl (meth)acrylate, and isooctyl (meth) acrylate as a monomer component through irradiation with an active energy beam; and
(10) A releasable pressure sensitive adhesive sheet according to any one of the items (1) to (5), in which the pressure sensitive adhesive layer includes a layer composed of a rubber-based pressure sensitive adhesive containing polyisobutylene as a main component.

### Effect of the Invention

According to the present invention, there is provided a releasable pressure sensitive adhesive sheet mainly usable as a protective sheet or tape for a coating film applied to the body or parts of an automobile, or especially a coating film applied to a plastic part such as a film-coated bumper having the following drawback: the coating film is dried to such an insufficient extent that a trace amount of a solvent remains immediately after the drying, or the coating film is cured to such an insufficient extent as to be apt to deform.

### Best Mode for carrying out the Invention

Hereinafter, the present invention will be described in detail.
The releasable pressure sensitive adhesive sheet of the present invention must satisfy the following requirement: the face of the pressure sensitive adhesive layer out of contact with the front substrate has a rolling circle arithmetic mean waviness (Wea) specified in JIS B0610 of 0.30 µm or less. The lower the "Wea", the better; in actuality, however, the "Wea" is preferably approximately 0.01 to 0.20 µm, or particularly preferably approximately 0.01 to 0.10 µm. It should be noted that the "Wea" is measured with a non-contact optical measuring device (for example, a confocal microscope, etc.) in consideration of the characteristics of the pressure sensitive adhesive layer.

A pressure sensitive adhesive to be used is not particularly limited, and a silicone-based pressure sensitive adhesive, an acryl-based pressuresensitiveadhesive, a rubber-based pressure sensitive adhesive, a urethane-based pressure sensitive adhesive, an ester-based pressure sensitive adhesive, or the like can be used. An addition reaction type silicone-based pressure sensitive adhesive, an acryl-based pressure sensitive adhesive, and a rubber-based pressure sensitive adhesive composed of polyisobutylene each excellent in releasability from an adherend (incompletely cured curable coating film) can each be particularly preferably used. A layer composed of the acryl-based pressure sensitive adhesive is preferably a pressure sensitive adhesive layer obtained by cross-linking a layer composed of a composition containing an acrylic homopolymer or copolymer free of active hydrogen, urethane (meth)acrylate, and an acrylate monomer through irradiation with an active energy beam.

The pressure sensitive adhesive layer formedon the front substrate in the releasable pressure sensitive adhesive sheet of the present invention has a thickness of typically approximately 1 to 50 µm, or preferably approximately 5 to 40 µm. Adjusting the thickness of the pressure sensitive adhesive layer to 1 µm or more is convenient for adjusting the "Wea" to 0.30 µm or less as well as for securing an adhesive force and a cohesive force (holding power) needed for the releasable pressure sensitive adhesive sheet to be used as, for example, a protective sheet or tape for a urethane-based coating film for an automobile. In addition, adjusting the thickness to 50 µm or less prevents the extension of the pressure sensitive adhesive layer froman edge in the releasable pressure sensitive adhesive sheet as well as an increase in cost for the production of the releasable pressure sensitive adhesive sheet.

In order that the "Wea" of the pressure sensitive adhesive layer is adjusted to 0.30 µm or less, the arithmetic mean waviness (Wa) specified in JIS B0601 of the release agent layer formed on the substrate of which the release material is constituted (hereinafter referred to as "substrate for the release material") or on the front substrate is preferably adjusted to 0.20 µm or less.
The lower the "Wa", the better because the "Wea" of the pressure sensitive adhesive layer can be reduced; from the viewpoint of economical efficiency, the "Wa" is typically approximately 0.01 to 0.10 µm because an object required for the releasable pressure sensitive adhesive sheet to be put into practical use can be sufficiently achieved. In addition, in the case where the pressure sensitive adhesive is directly formed on the front substrate before being stuck to the release material, a pressure sensitive adhesive layer having a lower "Wea" than that in the case where the pressure sensitive adhesive is formed on the release material before being stuck to the front substrate can be easily obtained.

First of all, the surface appearance of the substrate for the release material or front substrate on which the release agent layer is to be formed by the application of the release (treatment) agent plays an important role in controlling the "Wa" of the release agent layer in the substrate for the release material or in the front substrate to 0.20 µm or less. This is because the thickness of the release agent layer formed on the substrate for the release material or on the front substrate is extremely small, specifically approximately 0.1 to 1.0 µm.

The arithmetic mean waviness (Wa) specified in JIS B0601 of the surface of the substrate for the release material or front substrate used in the present invention is preferably 0.2 µm or less, or more preferably 0.01 to 0.1 µm.
The substrate for the release material or the front substrate may be able to achieve a "Wa" of 0.2 µm or less through molding by, for example, T-die molding or inflation molding; a film stretched with multiple mirror-finished and smooth rolls is preferably used as the substrate for the release material or the front substrate.
However, in the case of a frosted film to which titanium oxide or the like has been added or an embossed film, it is difficult to achieve a "Wa" of the film itself of 0.2 µm or less, and hence it is more difficult to achieve a "Wa" of the release agent layer to be described later of 0.2 µm or less.

As a material of the substrate for the release material or the front substrate, which can be used in the present invention and has a "Wa" of 0.2 µm or less, there may be used a film formed of a resin including a polyester such as polyethylene terephthalate or polyethylene naphthalate, a polyolefin such as polyethylene or polypropyrene, a polyimide, a polyether imide, a polyaramide, a polyether ketone, a polyether ether ketone, a polyphenylene sulfide, a poly(4-methylpentene-1), an ethylene-propylene copolymer, an ethylene-vinyl acetate copolymer, an ionomer, or a thermoplastic elastomer, or a releasing paper having a super mirror surface on which a resin such as polyethylene is laminated. From the viewpoints of transparency, shock resistance, economical efficiency, and handling easiness, a polyethylene terephthalate film or a polyethylene film is preferred.

The thickness of the substrate for the release material or of the front substrate is preferably 10 µm to 200 µm, or more preferably approximately 20 to 100 µm in ordinary cases, though the preferable value varies to some extent depending on a material to be used.
Adjusting the thickness of the substrate for the release material or of the front substrate to 200 µm or less can: prevent an excessive rise in rigidity of the releasable pressure sensitive adhesive sheet; prevent the releasable pressure sensitive adhesive sheet from becoming bulky when the releasable pressure sensitive adhesive sheet is turned into a laminate or a roll shape; and suppress an increase in cost for the production of the releasable pressure sensitive adhesive sheet. In addition, adjusting the thickness to 10 µm or more can: allow the releasable pressure sensitive adhesive sheet of the present invention to secure moderate rigidity; and secure the ease of handling of the releasable pressure sensitive adhesive sheet and a strength required for the releasable pressure sensitive adhesive sheet to serve as a protective material for a curable coating film for an automobile.
Further, the substrate for the release material or the front substrate may be subjected to, for example, a corona discharge treatment in order that adhesion between the release agent and the pressure sensitive adhesive may be improved.

Subsequently, the release agent and the release agent layer will be described. The release agent layer is formed by applying the release agent onto the substrate for the releasematerial or the front substrate and drying the applied release agent. When the "Wa" of the release agent layer is 0.20 µm or less as described above, the rolling circle arithmetic mean waviness (Wea) specified in JIS B0610 of the pressure sensitive adhesive layer can be adjusted to 0.30 µm or less, and the arithmetic mean waviness (Wa) of an uncured coating film after the pressure sensitive adhesive layer has been stuck to and released from the coating film can be adjusted to approximately 0.02 to 0.04 µm.
Examples of the release agent to be used for forming the release agent layer include a silicone-based resin, a fluorine-based resin, a fluorosilicone-based resin, a long-chain alkyl-based resin, a polyolefin-based resin, a urea-based resin, and an alkyd-based resin, etc.

The above release agent is used in the form of a solution prepared by dissolving the release agent in an organic solvent so that a solid matter concentration may be typically 0.1 to 5% by mass, or preferably approximately 0.1 to 3% by mass. Adjusting the solidmatter concentration to 0.1 to 5% by mass to reduce the viscosity of the solution allows one to: form an extremely thin release agent layer on the substrate for the release material or the front substrate; and adjust the "Wa" of the release agent layer to 0.20 µm or less.
Examples of the organic solvent to be used include aromatic hydrocarbon-based solvents such as toluene and xylene, ether-based solvents such as propylene glycol monomethyl ether, and ester-based solvents such as ethyl acetate, butyl acetate, and propylene glycol monomethyl ether acetate.
In order that the release agent layer formed by application to the substrate for the release material or the front substrate may be flattened, and the "Wa" is adjusted to 0.2 µm or less, for example, an acetylene diol-based, silicon-based, or fluorine-based leveling agent is preferably added to the release agent (a solution) .

A method of applying the release agent (a solution) is not particularly limited; a solution of the release agent in an organic solvent can be applied with, for example, a bar coater, a roll coater, or a gravure coater. After that, the face to which the release agent has been applied is dried, whereby the release agent layer is formed on the surface of the substrate for the release material or of the front substrate. The drying temperature is selected from various values depending on the kind of the substrate for the release material or of the front substrate, the kind of the release agent, the kind of the solvent, and the amount in which the release agent (a solution) is applied, and the drying temperature is typically 60 to 150°C, or preferably approximately 80 to 100°C, though the drying temperature is not particularly limited. The amount in which the release agent (a solution) is applied to the substrate for the release material or the front substrate can be adjusted by changing, for example, the application method or the concentration of the release agent in the solution.
It should be noted that the release agent to be used may be active energy beam-curable as long as the "Wa" of the release agent layer becomes 0.2 µm or less.

The thickness of the release agent layer formed on the substrate for the release material or on the front substrate is typically 0.05 to 5 µm, or preferably approximately 0.1 to 1 µm. Adjusting the thickness of the release agent layer to 0.05 µm or more sufficiently secures the wettability of the release agent (a solution) for such substrate for the release material or front substrate as described above and the releasability of the release agent layer from the pressure sensitive adhesive layer. Adjusting the thickness to 5 µm or less can: prevent the use of an unnecessary release agent; and alleviate an influence of the surface roughness of the substrate for the release material or front substrate on the "Wa" of the release agent layer.

When the substrate for the release material is not used, the pressure sensitive adhesive layer is formed on one face of the front substrate, and the release agent layer is formed on the other face of the front substrate, a laminate in which multiple releasable pressure sensitive adhesive sheets are laminated, or a commercial product in which a continuous releasable pressure sensitive adhesive sheet is wound in a roll shape is provided.
In the case of a commercial product provided as the laminate, the rolling circle arithmetic mean waviness (Wea) specified in JIS B0610 of the pressure sensitive adhesive layer exposed by releasing the releasable pressure sensitive adhesive sheets one by one becomes 0.30 µm or less.
On the other hand, in the case of the commercial product in which the continuous releasable pressure sensitive adhesive sheet is wound in a roll shape, when the continuous releasable pressure sensitive adhesive sheet is unwound from the roll while being released, the rolling circle arithmetic mean waviness (Wea) specified in JIS B0610 of the pressure sensitive adhesive layer onto which the face of the release agent layer formed on one face of the substrate has been transferred becomes 0.30 µm or less.

The releasable pressure sensitive adhesive sheet of the present invention mainly used as a protective sheet or tape for a curable coating film for an automobile exerts an effect particularly when the curable coating film as an adherend has an elastic modulus at 23°C measured by a nano-indentation method of 0.5 GPa to 3.5 GPa, or more particularly when the curable coating film is a coating film formed of a urethane-based paint.
When the elastic modulus is less than 0.5 GPa, a deformation except the waviness may occur in the coating film owing to, for example, contact bonding in sticking of the releasable pressure sensitive adhesive sheet. When the elastic modulus exceeds 3.5 GPa, the curable coating film is hardly affected by the rolling circle arithmetic mean waviness (Wea) of the pressure sensitive adhesive layer, so the effect of the releasable pressure sensitive adhesive sheet of the present invention cannot be obtained to a very large extent.

When the substrate for the release material is used in the present invention (Embodiment 1), the releasable pressure sensitive adhesive sheet is produced as a laminate by the following procedure: the release agent layer is formed on the substrate for the release material, the pressure sensitive adhesive layer is formed on the release agent layer, and the front substrate is stuck to the pressure sensitive adhesive layer, or the front substrate on which the pressure sensitive adhesive layer has been formed is stuck to the release agent layer on the substrate for the release material.
When the pressure sensitive adhesive is heat-curable or active energy beam-curable, the releasable pressure sensitive adhesive sheet of Embodiment 1 by the present invention having a moderate adhesive force and releasability can be obtained by the following procedure: the pressure sensitive adhesive layer is heated or irradiated with an active energy beam in a state where the pressure sensitive adhesive layer is formed on the release agent layer formed on the substrate for the release material, or a laminate is formed, and then the pressure sensitive adhesive are cross-linked through heating or irradiation with an active energy beam.

When the substrate for the release material is not used in the present invention (Embodiment 2), a laminate of releasable pressure sensitive adhesive sheets can be obtained by the following procedure: the release agent layer is formed on one face of the front substrate, the pressure sensitive adhesive layer is formed on the other face of the front substrate so that each releasable pressure sensitive adhesive sheet may be formed, and the multiple releasable pressure sensitive adhesive sheets are laminated in such a manner that the face of the release agent layer of one releasable pressure sensitive adhesive sheet and the face of the pressure sensitive adhesive layer of another releasable pressure sensitive adhesive sheet are stuck to each other; in addition, a roll of the releasable pressure sensitive adhesive sheet formed as described above can be obtained by winding the releasable pressure sensitive adhesive sheet in a roll shape. Alternatively, releasable pressure sensitive adhesive sheets each obtained by forming the release agent layer on one face of the front substrate and forming the pressure sensitive adhesive layer on the release agent layer maybe laminated, or any such releasable pressure sensitive adhesive sheet may be wound in a roll shape. In the present invention, each of Embodiment 1 and Embodiment 2 can be used.
When the pressure sensitive adhesive is heat- curable or active energy beam-curable, the pressure sensitive adhesive are preferably cross-linked through heating or irradiation with an active energy beam before the releasable pressure sensitive adhesive sheets are laminated, or any such releasable pressure sensitive adhesive sheet is wound in a roll shape.

A heating temperature when the cross-linking is promoted by heating is typically 60 to 140°C, or preferably 80 to 130°C. Heating at 60°C or higher can prevent an adhesive force of the releasable pressure sensitive adhesive sheet from becoming insufficient owing to insufficient cross-linking; heating at 140°C or lower can prevent a thermal shrinkage crease from occurring in the substrate for the release material or in the front substrate, or can prevent the substrate for the release material or the front substrate from deteriorating or discoloring.

It should be noted that the term "active energy beam" refers to a beam having an energy quantum out of an electromagnetic wave and charged particle beams, i.e., for example, active light such as an ultraviolet ray, or an electron beam. When the pressure sensitive adhesive are cross-linked by being irradiated with an electron beam, no photopolymerization initiator is needed; when it is cross-linked by being irradiated with active light such as an ultraviolet ray, a photopolymerization initiator is preferably caused to exist in the pressure sensitive adhesive.
The photopolymerization initiator when an ultraviolet ray is applied is not particularly limited, and an arbitrary one to be used can be appropriately selected from the photopolymerization initiators each of which has been conventionally used in an ultraviolet ray curable resin. Examples of the photopolymerization initiator include benzoins, benzophenones, acetophenones, α-hydroxyketones, α-aminoketones, α-diketones, a-diketonedialkyl acetals, anthraquinones, thioxanthones, and other compounds.
One kind of those photopolymerization initiators may be used alone, or two or more kinds of them may be used in combination. In addition, the usage of the photopolymerization initiator is selected from the range of typically 0.01 to 30 parts by mass, or preferably 0.05 to 20 parts by mass with respect to 100 parts by mass of urethane (meth) acrylate or 100 parts by mass of a copolymer having an unsaturated group at any one of side chains thereof.
A releasable pressure sensitive adhesive sheet having a moderate adhesive force and releasability can be obtained by cross-linking the pressure sensitive adhesive through heating or irradiation with an active energy beam.

The heating or the irradiation with an active energy beam is preferably performed under a nitrogen atmosphere in order that the inhibition of reaction due to oxygen may be prevented.

### Examples

Subsequently, the present invention will be described in more detail by way of examples and comparative examples. However, the present invention is by no means limited by these examples.

### <Evaluation items and evaluation methods>

### (1) Visual observation of coating film immediately after release of releasable pressure sensitive adhesive sheet

A two-part polyurethane-based clear paint for an automobile [a mixture of 100 parts by mass of "Quartz Clear Z" manufactured by Kansai Paint Company, Ltd. and 40 parts by mass of a multi curing agent] was sprayed onto a plate made of a polyolefin-based thermoplastic elastomer to which a primer and an intermediate paint had been applied so that the thickness of the clear paint after drying might be approximately 20 µm. Then, the clear paint was dried at 60°C for 30 minutes, and was left to stand at room temperature for 30 minutes, whereby an incompletely cured curable coating film was formed.

Subsequently, a releasable pressure sensitive adhesive sheet obtained in each example was stuck to the coating film, and was left to stand at room temperature for 24 hours. Then, the sheet was released, and the state of the coating film immediately after the release was visually observed and evaluated on the basis of the following two criteria.
○: No change can be found by visual observation.
×: Such a change that the surface of the coating film looks like a mat can be easily found by visual observation.

### (2) Measurement of arithmetic mean waviness (Wa) in accordance with JIS B0601

The arithmetic mean waviness (Wa) of a release agent layer applied to a substrate for a release material or a front substrate and the arithmetic mean waviness (Wa) of the above curable coating film immediately after the release of the releasable pressure sensitive adhesive sheet, which had been stuck to the coating film and left to stand at room temperature for 24 hours, were each measured with a surface roughness meter [a surface appearance analyzer "SURFTEST SV-3000" manufactured by Mitutoyo Corporation].

### (3) Measurement of rolling circle arithmetic mean waviness (Wea) in accordance with JIS B0610

The rolling circle arithmetic mean waviness (Wea) of a pressure sensitive adhesive layer immediately after the release of the substrate for a release material (release agent layer) was measured with a non-contact surface appearance measuring device [a wide-view, confocal microscope "HD-100D" manufactured by Lasertec Corporation].

### (4) Surface roughness of substrate for release material or of front substrate

The arithmetic mean waviness "Wa" was measured with a surface appearance analyzer "SURFTEST SV-3000" manufactured by Mitutoyo Corporation.

### (5) Measurement of elastic modulus of curable coating film by nano-indentation method

The elastic modulus at 23°C of the coating film immediately after such formation as described above at a position at a depth of 200 nm from the outermost layer of the coating film was measured with a nano indenter "Nano Indenter DCM" manufactured by MTS Systems Corporation in the United States of America. As a result, the elastic modulus was 0.7 GPa.

### Example 1 [Preparation of releasable pressure sensitive adhesive sheet having substrate for a release material]

The releasable pressure sensitive adhesive sheet of the present invention was produced by using a polyethylene terephthalate film having a thickness of 25 µm manufactured by Toray Industries, Inc. (PET25T70) as a front substrate in accordance with the following procedure.
A substrate for a release material was produced as described below. First of all, a polyethylene terephthalate film which had a thickness of 38 pm and whose face to be treated with a release agent had an arithmetic mean waviness (Wa) of 0.059 µm was produced by the following procedure : polyethylene terephthalate was subjected to melt extrusion at 280°C, a film was produced by cooling the extruded product on a smooth casting drum to solidify the product, the film was heated between heat rolls each having a temperature of 120°C and stretched at a magnification of four in a longitudinal direction thereof by means of a difference in circumferential speed between multi-stage nip rolls, the resultant film was then transported to a tenter and heated to a temperature (130°C) at which the film can be stretched so as to be stretched at a magnification of five in width direction thereof, and the resultant film was subjected to tension heat fixing at 200°C and then cooled.
A solution of a fluorosilicone (X-70-201) manufactured by Shin-Etsu Chemical Co., Ltd. as a release agent for a silicone pressure sensitive adhesive in toluene having a solid content of 2% by mass was prepared. The solution was applied to the face of the above polyethylene terephthalate film to be treated with a release agent by using a bar coater, and was cured by heating at 150°C for 60 seconds, whereby the substrate for a release material having a release agent layer having a thickness of 1.0 µm was produced. The release agent layer had an arithmetic mean waviness (Wa) of 0.063 µm.
A solution of a pressure sensitive adhesive was separately produced by diluting a mixed liquid composed of 100 parts by mass of an addition reaction type silicone (SD-4585PSA) manufactured by Dow Corning Toray Co., Ltd. containing a cross-linking agent as a pressure sensitive adhesive and 0.9 part by mass of an SRX-212 manufactured by Dow Corning Toray Co., Ltd. as a platinum catalyst with 100 parts by mass of toluene.
The above solution was applied to one face of the above front substrate using a knife coating method so that the thickness of the solution after drying might be 30 µm. Then, the solution was dried at 130°C for 5 minutes, whereby a pressure sensitive adhesive layer was formed. After that, the face of the substrate for a release material coated with the fluorosilicone (release agent layer) was stuck to the pressure sensitive adhesive layer by contact bonding, whereby the releasable pressure sensitive adhesive sheet was produced.
The pressure sensitive adhesive layer in the releasable pressure sensitive adhesive sheet after the substrate for a release material had been released had a rolling circle arithmetic mean waviness (Wea) of 0.140 µm.
The releasable pressure sensitive adhesive sheet was stuck to a curable coating film formed of the two-part polyurethane-based clear paint for an automobile. The coating film upon release of the sheet had an arithmetic mean waviness (Wa) of 0.035 µm.

### Example 2 [Preparation of releasable pressure sensitive adhesive sheet having substrate for release material]

A polyethylene film having a thickness of 50 µm and containing an antistatic agent (manufactured by J-Film Corporation, a trade name "PE Wadatoumei 50AS KAI4") was used as a front substrate.
A solution of an acryl-based pressure sensitive adhesive prepared by the following procedure was used as a solution of a pressure sensitive adhesive: 3.5 parts by mass of Irgacure 184 [an acetophenone-based polymerization initiator manufactured by Ciba Specialty Chemicals Inc.] was added as an initiator to a solution (solvent:ethyl acetate) of a pressure sensitive adhesive having a solid content of 35% by mass prepared by adding 5 parts by mass of a trifunctional urethane acrylate [manufactured by Nippon Synthetic Chemical Industry Co., Ltd., trade name "Shiko UV-1400B", weight-average molecular weight of less than 5,000] to 100 parts by mass of a butyl acrylate homopolymer having a weight-average molecular weight of 600, 000, and the mixture was diluted with ethyl acetate so that a solid content might be 30% by mass.
A substrate for a release material was produced as described below. First of all, a polyethylene terephthalate film which had a thickness of 50 µm and whose face to be treated with a release agent had an arithmetic mean waviness (Wa) of 0.058 µm was produced by the following procedure : polyethylene terephthalate was subjected to melt extrusion at 280°C, a film was produced by cooling the extruded product on a smooth casting drum to solidify the product, the film was heated between heat rolls each having a temperature of 120°C and stretched at a magnification of four in a longitudinal direction thereof by means of a difference in circumferential speed between multi-stage nip rolls, the resultant film was then transported to a tenter and heated to temperature (130°C) at which the film can be stretched so as to be stretched at a magnification of five in width direction thereof, and the resultant film was subjected to tension heat fixing at 200°C and then cooled.
A solution of a release agent produced by the following procedure was uniformly applied to the polyethylene terephthalate film with a bar coater so that the thickness of the solution after drying might be 0.1 µm: 100 parts by mass of a thermosetting silicone resin manufactured by Shin-Etsu Chemical Co., Ltd. (a trade name "KS-847H") and 1 part by mass of a curing agent manufactured by Shin-Etsu Chemical Co., Ltd. (a trade name "CAT-PL-50T") were mixed, and the mixture was diluted with toluene so that the solid content of the resultant might be adjusted to 1.1% by mass. Then, the solution was dried with a dryer at 130°C for 1 minute, whereby a release agent layer was formed.
The above acryl-based pressure sensitive adhesive was applied to the release agent layer formed on the above substrate for a release material so that the thickness of the pressure sensitive adhesive after drying might be 20 µm. Then, the above front substrate was stuck onto the applied pressure sensitive adhesive by contact bonding. After that, the resultant was cured by being irradiated with an ultraviolet ray from a mercury lamp, whereby a releasable pressure sensitive adhesive sheet was produced.
The releasable pressure sensitive adhesive sheet was stuck to the same coating film as the curable coating film in Example 1, and the arithmetic mean waviness (Wa) of the coating film after the release of the sheet was measured in the same manner as in Example 1. Table 1 shows the measurement results together with measured values such as the arithmetic mean waviness of the release agent layer.

### Example 3 [Preparation of releasable pressure sensitive adhesive sheet having substrate for release material]

The preparation was performed as described below with the same front substrate as that of Example 2.
As the substrate for a release material, there was produced a polyethylene terephthalate film which had a thickness of 50 µm and whose face to be treated with a release agent had an arithmetic mean waviness (Wa) of 0.062 µm.
As a pressure sensitive adhesive, there was used a solution obtained by mixing 100 parts by mass of a solution of an acryl-based pressure sensitive adhesive with 5 parts by mass of an ethyl acetate solution containing 5% by mass of 1,3-bis(N,N-diglycidyl aminomethyl)cyclohexane as a cross-linking agent. The solution of the acryl-based pressure sensitive adhesive was obtained by diluting 2-ethylhexyl acrylate-acrylic acid copolymer (molar ratio of 2-ethylhexyl acrylate/acrylic acid=10/1) having a weight-average molecular weight of 600,000 to 30% by mass using ethyl acetate.
The solution was applied to the release agent layer of the same substrate for a release material as that of Example 2 by using a knife coating method so that the thickness of the solution after drying might be 20 µm. Then, the solution was dried at 100°C for 3 minutes. After that, the same front substrate as that of Example 2 was stuck to the resultant by contact bonding, whereby a releasable pressure sensitive adhesive sheet was produced.
The releasable pressure sensitive adhesive sheet was stuck to the same coating film as the curable coating film in Example 1, and the arithmetic mean waviness (Wa) of the coating film after the release of the sheet was measured in the same manner as in Example 1. Table 1 shows the measurement results together with measured values such as the arithmetic mean waviness of the release agent layer.

### Example 4 [Preparation of releasable pressure sensitive adhesive sheet having substrate for release material]

The preparation was performed with the same front substrate as that of Example 3 and the same substrate for a release material as that of Example 2 as described below.
A solution prepared by diluting a rubber-based pressure sensitive adhesive composed of polyisobutylene having a viscosity-average molecular weight of 800, 000 with toluene so that the solution might have a concentration of 30% by mass was applied to one face of the same front substrate as that of Example 2, and toluene was evaporated by drying the solution with a dryer at 100°C for 5 minutes, whereby a pressure sensitive adhesive layer was formed. The release agent layer of the same substrate for a release material having the release agent layer as that of Example 2 was stuck to the pressure sensitive adhesive layer by contact bonding, whereby a releasable pressure sensitive adhesive sheet was produced.
The releasable pressure sensitive adhesive sheet was stuck to the same coating film as the curable coating film in Example 1, and the arithmetic mean waviness (Wa) of the coating film after the release of the sheet was measured in the same manner as in Example 1. Table 1 shows the measurement results together with measured values such as the arithmetic mean waviness of the release agent layer.

### Example 5 [Preparation of releasable pressure sensitive adhesive sheet having no substrate for release material]

A polyethylene terephthalate film "PET25T70" having a thickness of 25 µm and manufactured by Toray Industries, Inc. was used as a front substrate. A solution prepared by dissolving "Peeloil 1050" manufactured by Ipposha Oil Industries Co., Ltd. as a release agent having a long-chain alkyl group in toluene so that the solution might have a concentration of 5% by mass was applied to one face of the front substrate [having an arithmetic mean waviness (Wa) of 0.061 µm] with a bar coater so that the thickness of the solution after drying might be 0.5 µm. Then, the solution was heated and dried at 100°C for 5 minutes, whereby a front substrate having a release agent layer on one of the faces was produced.
Subsequently, the same rubber-based pressure sensitive adhesive as that used in Example 4 was applied to the other face of the front substrate where no release agent layer was present with a knife coater so that the thickness of the pressure sensitive adhesive after drying might be 20 µm. Then, the pressure sensitive adhesive was heated and dried with a dryer at 100°C for 5 minutes, whereby a pressure sensitive adhesive layer was formed.
Multiple releasable pressuresensitive adhesive sheets of this kind prepared as described above each having the pressure sensitive adhesive layer on one face of the front substrate and the release agent layer on the other face of the front substrate were laminated so that the pressure sensitive adhesive layer of one releasable pressure sensitive adhesive sheet and the release agent layer of another releasable pressure sensitive adhesive sheet might face each other. Then, the sheets were subjected to contact bonding, whereby a laminate was produced.
The releasable pressure sensitive adhesive sheets were released from the laminate one by one, and each sheet was stuck to the same coating film as the curable coating film in Example 1. The arithmetic mean waviness (Wa) of the coating film after the release of the sheet was measured in the same manner as in Example 1. Table 1 shows the measurement results together with measured values such as the arithmetic mean waviness of the release agent layer.

### Comparative Example 1 [Preparation of releasable pressure sensitive adhesive sheet for comparison having substrate for release material]

A releasable pressure sensitive adhesive sheet for comparison was produced in the same manner as in Example 3 with the same front substrate and pressure sensitive adhesive as those of Example 3 except that a polyethylene-laminated releasing paper "SP-11LL" having a thickness of 175 µm and an arithmetic mean waviness (Wa) of 0.312 µm and manufactured by Lintec Corporation was used as a substrate for a release material.
The releasable pressure sensitive adhesive sheet was stuck to the same coating film as the curable coating film in Example 1, and the arithmetic mean waviness (Wa) of the coating film after the release of the sheet was measured in the same manner as in Example 1. Table 1 shows the measurement results together with measured values such as the arithmetic mean waviness of the release agent layer.

### Comparative Example 2 [Preparation of releasable pressure sensitive adhesive sheet for comparison having no substrate for release material]

An embossed vinyl chloride film "PVC Clear Matte Emboss" having a thickness of 50 µm and manufactured by CHIYODA GRAVURE CORPORATION was used as a front substrate. A solution (release agent concentration: 5% by mass) of a long-chain alkyl-based release agent "Peeloil 1050" manufactured by Ipposha Oil Industries Co., Ltd. in toluene was applied to the embossed (protruded) face of the front substrate [having an arithmetic mean waviness (Wa) of 5.872 µm] with a bar coater so that the thickness of the solution after drying might be 0.5 µm. Then, the solution was heated and dried with a dryer at 100°C for 5 minutes, whereby a release agent layer was formed.
Subsequently, the same rubber-based pressure sensitive adhesive as that used in Example 4 was applied to the back side (recessed face of embossing) of the front substrate with a knife coater so that the thickness of the pressure sensitive adhesive after drying might be 20 µm. Then, the pressure sensitive adhesive was heated and dried under conditions identical to those of Example 4 so that a pressure sensitive adhesive layer might be formed. Thus, a releasable pressure sensitive adhesive sheet for comparison was produced.
Multiple releasable pressure sensitive adhesive sheets for comparison of this kind prepared as described above each having the pressure sensitive adhesive layer on one face of the front substrate and the release agent layer on the other face of the front substrate were laminated so that the pressure sensitive adhesive layer of one releasable pressure sensitive adhesive sheet and the release agent layer of another releasable pressure sensitive adhesive sheet might face each other. Then, the sheets were subjected to contact bonding, whereby a laminate was produced. The releasable pressure sensitive adhesive sheets were released from the laminate one by one, and each sheet was stuck to the same coating film as the curable coating film in Example 1. The arithmetic mean waviness (Wa) of the coating film after the release of the sheet was measured in the same manner as in Example 1. Table 1 shows the measurement results together with measured values such as the arithmetic mean waviness of the release agent layer.

### Comparative Example 3 [Preparation of releasable pressure sensitive adhesive sheet for comparison having no substrate for release material]

A film having a thickness of 50 µm obtained by extruding a mixture of 60 parts by mass of a propylene homopolymer, 35 parts by mass of a propylene random polymer, and 5 parts by mass of titanium oxide with an extruder having a T-die was used as a front substrate.
The same product as the release agent (a solution) described in Example 5 was applied to one face of the film (having a "Wa" specified in JIS B0601 of 0.251 µm) with a bar coater so that the thickness of the product after drying might be 0.1 µm. Then, the product was heated and dried under conditions identical to those of Example 5, whereby a release agent layer was formed.
The arithmetic mean waviness of the release agent layer was 0.255 µm.
The same rubber-based pressure sensitive adhesive as that used in Example 4 was applied to the other face of the above front substrate where no release agent layer was formed with a knife coater so that the thickness of the pressure sensitive adhesive after drying might be 20 µm. Then, the pressure sensitive adhesive was heated and dried under conditions identical to those of Example 4, whereby a pressure sensitive adhesive layer was formed. Thus, a releasable pressure sensitive adhesive sheets for comparison was produced.
Multiple releasable pressure sensitive adhesive sheets for comparison of the above kind were laminated so that the pressure sensitive adhesive layer of one releasable pressure sensitive adhesive sheet and the release agent layer of another releasable pressure sensitive adhesive sheet might face each other. Then, the sheets were subjected to contact bonding, whereby a laminate was produced. The releasable pressure sensitive adhesive sheets were released from the laminate one by one, and each sheet was stuck to the same coating film as the curable coating film in Example 1. The arithmetic mean waviness (Wa) of the coating film after the release of the sheet was measured in the same manner as in Example 1. Table 1 shows the measurement results together with measured values such as the arithmetic mean waviness of the release agent layer.

### [Table 1]

**Table 1**

| | Coating film after release of releasable pressure sensitive adhesive sheet | | Pressure sensitive adhesive layer | Release agent layer *1 | Front substrate | Substrate for releasematerial |
|---|---|---|---|---|---|---|
| | Visual observation | Arithmetic mean waviness (Wa) | Rolling circle arithmetic mean waviness (Wea) | Arithmetic mean waviness (Wa) | Arithmetic mean waviness (Wa) | Arithmetic mean waviness (Wa) |
| Example 1 | ○ | 0.035 | 0.140 | 0.063 | - | 0.059 |
| Example 2 | ○ | 0.025 | 0.135 | 0.059 | - | 0.058 |
| Example 3 | ○ | 0.029 | 0.139 | 0.067 | - | 0.062 |
| Example 4 | ○ | 0.032 | 0.140 | 0.069 | - | 0.062 |
| Example 5 | ○ | 0.037 | 0.139 | 0.071 | 0.061 | - |
| Comparative Example 1 | × | 0.066 | 0.499 | 0.309 | - | 0.312 |
| Comparative Example 2 | × | 1.251 | 6.551 | 6.077 | 5.872 | - |
| Comparative Example 3 | × | 0.058 | 0.353 | 0.255 | 0.251 | - |
| *1 The term refers to the release agent layer of a substrate for a release material in each of Examples 1 to 4 and Comparative Example 1, or refers to the release agent layer of a front substrate in each of Example 5 and Comparative Examples 2 and 3. | | | | | | |

As is apparent from the results of Table 1, the external appearance and arithmetic mean waviness (Wa) of a curable coating film immediately after the release of the releasable pressure sensitive adhesive sheet of the present invention obtained in each example, which has been stuck to the coating film and left to stand for a predetermined time period, are better than those in the case of the releasable pressure sensitive adhesive sheet obtained in each comparative example.

### Industrial Applicability

The releasable pressure sensitive adhesive sheet of the present invention is mainly used as a protective sheet or tape for a curable coating film for an automobile.

## Claims

1. A releasable pressure sensitive adhesive sheet for a curable coating film having a pressure sensitive adhesive layer on one face of a front substrate, wherein a face of the pressure sensitive adhesive layer out of contact with the front substrate has a rolling circle arithmetic mean waviness (Wea) specified in JIS B0610 of 0.30 µm or less.

2. The releasable pressure sensitive adhesive sheet according to claim 1, wherein a release agent layer face of a release material having a release agent layer is stuck to the face of the pressure sensitive adhesive layer out of contact with the front substrate, and the release agent layer has an arithmetic mean waviness (Wa) specified in JIS B0601 of 0.20 µm or less.

3. The releasable pressure sensitive adhesive sheet according to claim 2, wherein a face of a substrate of which the release material is constituted to be treated with a release agent has an arithmetic mean waviness (Wa) specified in JIS B0601 of 0.20 µm or less.

4. The releasable pressure sensitive adhesive sheet according to claim 1, wherein a release agent layer is present on a face of the front substrate out of contact with the pressure sensitive adhesive layer, and the release agent layer has an arithmetic mean waviness (Wa) specified in JIS B0601 of 0.20 µm or less.

5. The releasable pressure sensitive adhesive sheet according to claim 4, wherein a face of the front substrate to be treated with a release agent has an arithmetic mean waviness (Wa) specified in JIS B0601 of 0.20 µm or less.

6. The releasable pressure sensitive adhesive sheet according to any one of claims 1 to 5, wherein the curable coating film has an elastic modulus at 23°C measured by a nano-indentation method of 0.5 GPa to 3.5 GPa.

7. The releasable pressure sensitive adhesive sheet according to any one of claims 1 to 5, wherein the pressure sensitive adhesive layer comprises a layer composed of an addition reaction type silicone-based pressure sensitive adhesive.

8. The releasable pressure sensitive adhesive sheet according to any one of claims 1 to 5, wherein the pressure sensitive adhesive layer comprises a layer obtained by cross-linking a layer composed of a composition containing an acryl-based homopolymer or copolymer which contains at least one kind selected from butyl (meth) acrylate, 2-ethylhexyl(meth)acrylate, and isooctyl(meth)acrylate as a monomer component and which is free of active hydrogen, and urethane (meth)acrylate through irradiation with an active energy beam.

9. The releasable pressure sensitive adhesive sheet according to any one of claims 1 to 5, wherein the pressure sensitive adhesive layer comprises a layer obtained by cross-linking a copolymer having an unsaturated group at any one of side chains thereof and containing at least one kind selected from butyl(meth)acrylate, 2-ethylhexyl(meth)acrylate, and isooctyl(meth)acrylate as a monomer component through irradiation with an active energy beam.

10. The releasable pressure sensitive adhesive sheet according to any one of claims 1 to 5, wherein the pressure sensitive adhesive layer comprises a layer composed of a rubber-basedpressure sensitive adhesive containing polyisobutylene as a main component.
